Europäisches Patentamt

European Patent Office

Office européen des brevets

(11) Veröffentlichungsnummer: **0 053 373**

**B1**

(12) **EUROPÄISCHE PATENTSCHRIFT**

(45) Veröffentlichungstag der Patentschrift: **12.02.86**

(51) Int. Cl.⁴: **A 61 D 7/00**

(21) Anmeldenummer: **81109957.1**

(22) Anmeldetag: **27.11.81**

(54) **Nasenspange.**

(30) Priorität: **03.12.80 DE 3045527**

(43) Veröffentlichungstag der Anmeldung:
**09.06.82 Patentblatt 82/23**

(45) Bekanntmachung des Hinweises auf die
Patenterteilung:
**12.02.86 Patentblatt 86/07**

(84) Benannte Vertragsstaaten:
**AT BE CH DE FR GB IT LI LU NL SE**

(56) Entgegenhaltungen:
**DE-A-2 910 629**
**US-A-3 722 509**

(73) Patentinhaber: **HOECHST
AKTIENGESELLSCHAFT
Postfach 80 03 20
D-6230 Frankfurt am Main 80 (DE)**

(72) Erfinder: **Hiller, Dietrich, Dr.
Riederbergstrasse 11
D-6200 Wiesbaden (DE)**
Erfinder: **Klatt, Peter, Dr.
Theresenstrasse 51
D-6233 Kelkheim (Taunus) (DE)**
Erfinder: **Reul, Bernhard
Blumenstrasse 25
D-6240 Königstein/Taunus (DE)**

**Beschreibung**

In der deutschen Offenlegungsschrift 29 02 414 werden Depotkörper auf Basis von Silicon-Kautschuk beschrieben. Sie können verschiedene Formen haben. Entsprechend einer bevorzugten Ausführungsform sind sie zylindrisch. Die beschriebenen Depotkörper eignen sich insbesondere zur Applikation von Wirkstoffen mit Hilfe von Nasenspangen, wie sie zum Beispiel in der deutschen Patentschrift 2 125 464 beschrieben werden.

Nasenspangen, die aus einem Bügel bestehen, dessen Enden Einrichtungen zur Aufnahme von Wirkstoffen in Form von Depotkörper besitzen, wobei die Einrichtungen und die Depotkörper nierenförmig sein können und so einen etwa dreieckigen Grundriß aufweisen, werden in der deutschen Offenlegungsschift 29 10 629 beschrieben.

In der Rinderhaltung werden die Tiere meist in Anbinde- oder Freilaufställen gehalten. Bei Kälbern kommt noch die Boxenhaltung hinzu. Sowohl bei dieser als auch in Freilaufställen zeigte sich, daß von den Tieren die bekannten Spangen häufiger abgeworfen wurden als in Anbindeställen. Dies beeinträchtigt den angestrebten Effekt der Nasenspangen-Applikation bei den genannten Rinderhaltungsformen.

In den vorstehenden und nachfolgenden Ausführungen wird, wenn nichts anderes angegeben ist, unter "Rind" bzw. "Rinder" die Tierart Rind verstanden.

Es wurde nun überraschenderweise gefunden, daß die erfindungsgemäßen Nasenspangen mit Bügel, Einrichtungen zur Aufnahme von Depotkörpern und mit Depotkörpern in allen Rinderhaltungsarten gleich gute Sitzeigenschaften aufweisen und damit der gewünschte Effekt erreicht wird.

Die Erfindung betrifft eine Nasenspange mit Bügel, mit Einrichtungen zur Aufnahme von Depotkörpern und mit Depotkörpern, die einen etwa dreieckigen Grundriß aufweisen, dadurch gekennzeichnet, daß der Bügel nahe der einen Ecke jedes Depotkörpers befestigt ist, wobei die Seiten des Dreiecks, welche in Richtung des Bügels zeigen, eine Winkel α von mindestens 40 Grad bilden.

Die Seiten des Dreiecks, welche in Richtung des Bügels der Nasenspange zeigen, bilden de Winkel α von vorzugsweise 50 bis 110 Grad. Die dritte Seite liegt dem Winkel gegenüber. Die Seiten sind etwa geradlinig, sie können aber auch eingestülpt oder ausgebuchtet sein, wobei dann von einem Dreieck abgeleitete Grundrisse entstehen, wie zum Beispiel nierenförmige Grundrisse.

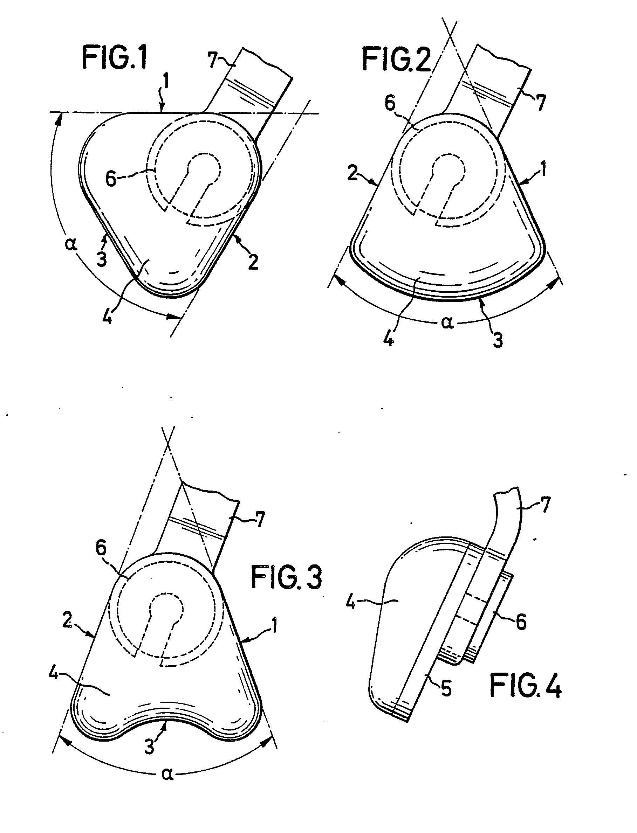

Im folgenden wird die Erfindung an Ausführungsbeispielen erläutert. Die Figuren 1 bis 3 zeigen eine Teilansicht verschiedener Ausführungsarten der Erfindung. Die Figur 4 zeigt die Seitenansicht eines Depotkörpers 4 mit Verbindungsteil 5, 6 und Teil eines Bügels 7.

Unter Berücksichtigung der anatomischen Verhältnisse sind die Ecken abgerundet. Dabei ist es nicht erforderlich, daß zum Beispiel alle drei Ecken des Dreiecks gleich abgerundet sind. Die Seiten des Dreiecks können gleich oder verschieden lang sein. Seite 1 ist vorzugsweise geradlinig, Seite 2 eingestülpt und Seite 3 ausgebuchtet.

Der Winkel α beträgt vorzugsweise 50° bis 100°, besonders bevorzugt ist einer von 95°.

Die der Nasenscheidewand der Tieres zugewandte Seite des Depotkörpers 4 ist abgerundet. Er ist abgerundet und kegel- oder sattelförmig und den anatomischen Verhältnissen im Nasenvorhof angepaßt.

Der Depotkörper 4 kann überall gleich stark sein, bevorsugt ist aber aus technischen Gründen und insbesondere aus Gründen der Verträglichkeit und wegen des besseren Sitzes ein Depotkörper, der vorn stärker ist als hinten (also in Richtung Naseninneres Figur 4,4).

Die erfindungsgemäße Nasenspange mit den Depotkörpern eignet sich zur Applikation von Wirkstoffen bei Tieren, insbesondere bei Rindern.

Als Bügel mit Einrichtungen zur Aufnahme von Depotkörpern eignet sich zum Beispiel derjenige, der in der deutschen Offenlegungsschrift 29 10 629 beschrieben ist.

Die Depotkörper können prinzipiell aus jedem geeigneten, physiologisch verträglichen Material hergestellt werden. Bevorzugt sind jedoch Depotkörper auf Basis Silicon-Kautschuk. Sie können nach dem in der deutschen Offenlegungsschrift 29 02 414 beschriebenen Verfahren hergestellt werden.

**Patentansprüche**

1. Nasenspange mit Bügel (7), mit Einrichtungen zur Aufnahme von Depotkörpern (4), und mit Depotkörpern (4), die einen etwa dreieckigen Grundriß aufweisen, dadurch gekennzeichnet, daß der Bügel (7) nahe der einen Ecke jedes Depotkörpers (4) befestigt ist, wobei die Seiten des Dreiecks, welche in Richtung des Bügels (7) zeigen, einen Winkel α von mindestens 40 Grad bilden.

2. Nasenspange gemäß Anspruch 1, dadurch gekennzeichnet, daß die Seiten (1, 2) des Dreiecks, die in Richtung des Bügels (7) zeigen, einen Winkel α von 50 bis 110° bilden.

3. Nasenspange gemäß Ansprüchen 1 und 2, dadurch gekennzeichnet, daß der Winkel α 95° beträgt.

4. Nasenspange gemäß Ansprüchen 1 bis 3, dadurch gekennzeichnet, daß die Seiten des Dreiecks geradlinig, eingestülpt oder ausgebuchtet sind.

5. Nasenspange gemäß Ansprüchen 1 bis 4, dadurch gekennzeichnet, daß die Ecken sowie die der Nasenscheidewand zugewandte Seite der Depotkörper (4) abgerundet sind und die Depotkörper (4) entsprechend den anatomischen Verhältnissen kegel- oder sattelförmig abgerundet sind.

6. Nasenspange gemäß Ansprüche 1 bis 5, dadurch gekennzeichnet, daß die Depotkörper (4) vorn stärker sind als hinten.

**Revendications**

1. Pince nasale comprenant un arceau (7), des dispositifs de logement de corps de dépôt (4) et des corps de dépôt (4) qui présentent une forme en plan à peu près triangulaire, caractérisée en ce que l'arceau (7) est fixé à proximité d'un angle de chaque corps de dépôt (4), les côtés du triangle qui sont dirigés vers l'arceau (7) formant un angle α d'au moins 40°.

2. Pince nasale selon la revendication 1, caractérisée en ce que les côtés (1, 2) du triangle qui sont dirigés vers l'arceau (7) forment un angle α de 50 à 110°.

3. Pince nasale selon les revendications 1 et 2, caractérisée en ce que l'angle α est de 95°.

4. Pince nasale selon les revendications 1 à 3, caractérisée en ce que les côtés du triangle sont rectiligne, incurvés ou indentés.

5. Pince nasale selon les revendications 1 à 4, caractérisée en ce que les angles ainsi que le côté des corps de dépôt (4) dirigés vers la cloison nasale sont arrondis et que les corps de dépôt (4) sont arrondis avec une forme conique ou ensellée, conformément aux conditions anatomiques.

6. Pince nasale selon les revendications 1 à 5, caractérisée en ce que les corps de dépôt (4) sont plus épais à l'avant qu'à l'arrière.

**Claims**

1. A nose-clip with a bow (7), means for receiving depot bodies (4) and equipped with depot bodies which have a nearly triangular outline wherein the bow (7) is fixed near of the one edge of each depot body whereby the sides of the triangle directed towards the bow (7) form an angle α of at least 40°.

2. Nose-clip as claimed in Claim 1 wherein the sides (1, 2) of the triangle which are directed towards the bow (7) form an angle α from 50 to 110°.

3. Nose-clip as claimed in Claims 1 and 2 wherein the angle α is 95°.

4. Nose-clip as claimed in Claims 1 to 3 wherein the sides of the triangle are rectilinear, curved or dented.

5. Nose-clip as claimed in Claims 1 to 4 wherein the edges and the side of the depot bodies (4) facing the nasal septum are rounded off and the depot bodies (4) are cone- or saddle-shaped in accordance with the anatomic conditions.

6. Nose-clip as claimed in Claims 1 to 5 wherein the front part of the depot bodies (4) is thicker than the back part.

FIG.1

FIG.2

FIG.3

FIG.4

1